# EUROPÄISCHE PATENTSCHRIFT

(11) **EP 2 265 653 B1**
(45) Veröffentlichungstag und Bekanntmachung des Hinweises auf die Patenterteilung: **28.02.2018**
(21) Anmeldenummer: 09731566.7
(22) Anmeldetag: 19.03.2009
(51) Int. Cl.: C08G 18/00, C08G 18/08, C08G 18/36, C08G 18/38, C08G 18/66, G01N 21/78

(54) **HÄRTBARE MASSEN ENTHALTEND FARBINDIKATOREN ZUR ANZEIGE DES AUSHÄRTUNGSFORTSCHRITTS**
CURABLE COMPOUNDS COMPRISING COLOR INDICATORS FOR DISPLAYING THE CURING PROGRESS
MATIÈRES DURCISSABLES CONTENANT DES INDICATEURS DE COULEUR POUR INDIQUER LA PROGRESSION DU DURCISSEMENT

(30) Priorität: 15.04.2008 DE 102008019017
(43) Veröffentlichungstag der Anmeldung: 29.12.2010
(73) Patentinhaber: HellermannTyton GmbH, 25436 Tornesch (DE)
(72) Erfinder: JOHN, Günther, 21493 Schwarzenbek (DE); EHMKE, Stefanie, 22175 Hamburg (DE)
(74) Vertreter: Robert, Vincent
(86) Internationale Anmeldenummer: PCT/DE2009/000360
(87) Internationale Veröffentlichungsnummer: WO 2009/127182

(56) Entgegenhaltungen:
- WO-A1-98/10003
- WO-A1-03/046061
- FR-A1- 2 237 922

## Beschreibung

Die vorliegende Erfindung betrifft Mittel und Verfahren zur Anzeige des Aushärtungsfortschritts in härtbaren Massen, insbesondere in zweikomponentigen Polyurethansystemen, sowie die Verwendung von Farbstoffen mit chinoiden Gruppen als Farbindikatoren in unter Verwendung von Isocyanaten herstellbaren Massen.

Als Polyurethane (PUR), werden Polymere bezeichnet, welche durch Polyaddition aus zwei- und höherwertigen Alkoholen und Isocyanaten erhalten werden. Übliche Polyurethane werden aus Polyester- und Polyetherdiolen und Diisocyanaten wie beispielsweise Toluoldiisocyanat (TDI), 4,4'-Methylen-di-phenylisocyanat (MDI) oder Hexamethylendiisocyanat (HMDI) hergestellt. Der Einsatz von Diolen und Isocyanaten in äquimolaren Verhältnissen führt zu linearen Polyurethanen. Verzweigte und vernetzte Produkte fallen bei Mitverwendung von höherfunktionellen Edukten bei der Polyurethan-Synthese oder auch bei Isocyanat-Überschuß an, wobei Isocyanat-Gruppen mit Urethan- oder Harnstoff-Gruppen reagieren. Als Katalysatoren für die Polyaddition werden bestimmte Amine sowie organische Zinn- und Zirkoniumverbindungen eingesetzt. Üblicherweise werden Polyurethane als Prepolymere mit terminalen Isocyanat-Gruppen hergestellt, welche bei der Anwendung z.B. als Dichtungsmassen mit Feuchtigkeit aus der Umgebung unter Kettenverlängerung und gegebenenfalls Vernetzung aushärten. Derartige Prepolymere können auch mit Diaminen kettenverlängert werden, wobei Polyurethane entstehen, welche Harnstoff-Gruppen enthalten.

Polyurethanschäume entstehen, wenn die Polyaddition in Anwesenheit von Wasser oder Carbonsäuren durchgeführt wird. Diese reagieren mit den Isocyanaten unter Abspaltung von Kohlendioxid, welches auftreibend und schaumbildend wirkt. Als Polyurethanharze werden Harze auf der Basis von Polyurethanen bezeichnet. Hergestellt werden sie beispielsweise durch die Umsetzung von Mono-und Diglyceriden mit Diisocyanaten wie z.B. Toluoldiisocyanaten (TDI). Zu den Polyurethan-Harzen werden auch Polyurethan-Prepolymere mit endständigen freien oder blockierten Isocyanat-Gruppen gerechnet, welche bei Feuchtigkeitseinwirkung aushärten.

Je nach Wahl und stöchiometrischem Verhältnis der Ausgangsstoffe gelangt man zu Polyurethanen mit sehr unterschiedlichen mechanischen Eigenschaften. Sie können beispielsweise als Bestandteile von Klebstoffen und Lacken vor allem in Form von Polyurethanharzen, als Polyether- oder Polyesterurethankautschuk, als duroplastische Gießharze und als Schaumkunststoffe eingesetzt werden.

Unter dem Begriff Polyurethansystem werden im Folgenden alle Polymere verstanden, welche kettenverlängernde oder vernetzende Urethangruppen aus der Umsetzung von Isocyanaten mit Polyolen enthalten.

Üblicherweise werden als Beschichtungs-, Isolier- und Dichtmassen Zweikomponenten-Polyurethansysteme eingesetzt. In diesen Systemen enthält die eine Komponente die Polyole und die andere auch als Härter bezeichnete Komponente die Isocyanate. Die beiden Komponenten werden vor einer Anwendung mit einander vermischt und anschließend ausgehärtet. Voraussetzung für eine gleichmäßige Aushärtung ist die homogene Durchmischung der Komponenten. Darüber hinaus müssen insbesondere Polyurethansysteme, welche weiter bearbeitet werden, vor der weiteren Verarbeitung vollständig ausgehärtet sein. Bei den üblicherweise eingesetzten Zweikomponenten-Polyurethansystemen ist sowohl die Homogenität der Mischung aus den Komponenten als auch der Zeitpunkt der vollständigen Aushärtung der entstehenden Masse nur schwer zu bestimmen.

Bekannt ist der Einsatz von jeweils unterschiedlichen Farbstoffen oder Pigmenten in den beiden Komponenten eines Polyurethansystems, welche sich während des Mischvorgangs zu einem neuen Farbton mischen. Hierbei wird jedoch ausschließlich die Homogenität der Mischung angezeigt.

Zur Bestimmung des Aushärtungsfortschritts ist der Einsatz von pH-Indikatoren bekannt. So beschreibt DE 101 15 004 A1 ein feuchtigkeitsaushärtendes Polyurethansystem, das vor der Feuchtigkeitsaushärtung einen Überschuß an Isocyanat-Gruppen aufweist und aus Verbindungen mit mindestens zwei Isocyanatgruppen, Verbindungen mit mindestens zwei gegenüber Isocyanatgruppen reaktiven Wasserstoffatomen und einer Aminverbindung hergestellt ist. Dieses Polyurethansystem enthält einen pH-Indikator, welcher die Aushärtung des Systems bzw. die Erhöhung des pH-Wertes durch die Zunahme an freien Amingruppen während der Aushärtung durch Farbumschlag anzeigt.

Für Polyurethansysteme, welche während des Aushärtens keine signifikante pH-Wertänderung zeigen, ist der Einsatz eines pH-Indikators jedoch nicht geeignet.

WO 03/046061 beschreibt einen blauen Anthrachinon-Farbstoff zur dauerhaften Schwarzfärbung von Polyurethanschäumen. FR 2 237 922 A1 offenbart dauerhaft eingefärbte Polyurethane, wobei die Farbstoffe in das Polymer einpolymerisiert werden. WO 98/10003 A1 offenbart lichthärtbare Zusammensetzungen, die optional Farbstoffe enthalten können.

Aufgabe der vorliegenden Erfindung ist es daher, Mittel und Verfahren zur Verfügung zu stellen, welche die Anzeige des Aushärtungsfortschritts in härtbaren Massen verbessern, insbesondere in Massen, welche aus zweikomponentigen Polyurethansystemen herstellbar sind.

Die Aufgabe wird durch eine härtbare Masse und ein Verfahren zur optischen Anzeige des Aushärtungsgrades gemäß den unabhängigen Ansprüchen gelöst. Bevorzugte Ausführungsformen sind Gegenstand der Unteransprüche und der Beschreibung.

Es wurde überraschend gefunden, dass bei der Herstellung und Aushärtung von Massen aus zweikomponentigen Polyurethansystemen der Fortschritt des Aushärtungsprozesses durch eine Farbänderung von Stoffen mit zumindest einer chinoiden Gruppe angezeigt wird. Das erfindungsgemäße zweikomponentige Polyurethansystem umfasst dabei mindestens eine Komponente, welche ein oder mehrere Polyole enthält, und mindestens eine weitere Komponente, welche ein oder mehrere Isocyanate enthält.

Als Farbindikatoren werden Substanzen, welche ein oder mehrere chinoide Gruppen enthalten, insbesondere Farbstoffe oder Pigmente eingesetzt. Unter dem Begriff chinoide Gruppen werden im Sinn der vorliegenden Erfindung Kohlenstoffringe insbesondere 6-gliedrige Ringsysteme verstanden, welche konjugierte Doppelbindungen aber keine Aromatizität aufweisen.

Chinoide Gruppen bzw. Systeme entstehen üblicherweise durch Desaromatisierung benzoider Systeme. Besonders bevorzugt werden Anthrachinon-Farbstoffe und Anthrachinon-Pigmente eingesetzt wie beispielsweise Solvent Blue 104, Solvent Green 3, Solvent Violet 59, Solvent Green 28, Solvent Violet 13, Solvent Red 195, Solvent Orange 60, Solvent Red 179, Disperse Violet 26 und Dispers Yellow 64.

In einer bevorzugten Ausführungsform wird der Masse, besonders bevorzugt der Polyolkomponente, zumindest ein Anthrachinon-Farbstoff oder Anthrachinon-Pigment in einer Konzentration von 0,1 bis 500 ppm bezogen auf die Masse der Polyolkomponente zugesetzt. Die zugesetzte Menge ist abhängig vom Farbstoff oder Pigment selbst und der Zusammensetzung der Masse bzw. der Polyolkomponente. Bei Konzentrationen unter 0,1 ppm reicht die Farbintensität im allgemeinen jedoch nicht mehr aus, um einen Farbumschlag noch zu erkennen. Konzentrationen über 500 ppm hingegen sind zum eindeutigem Erkennen des Farbumschlags nicht notwendig.

Darüber hinaus können die Polyolkomponente ebenso wie die Isocyanatkomponente weitere dem Fachmann geläufige Stoffe aufweisen, wie sie üblicherweise zur Einstellung bestimmter Eigenschaften in den erfindungsgemäßen Massen eingesetzt werden. Es können beispielsweise Füllstoffe, Katalysatoren, Weichmacher und andere Zuschlagstoffe wie Flammschutzmittel, Molekularsiebe und Stabilisatoren den Komponenten zugesetzt werden.

Es ist weiterhin vorgesehen, der Isocyanatkomponente zusätzlich Farbstoffe und/oder

Pigmente zuzusetzen, um die Homogenität der Mischung der Polyol- und Isocyanatkomponente anzuzeigen. Geeignete Farbstoffe und Pigmente sind beispielsweise Solvent Blue 104 und Violet 13.

Die Homogenität der erfindungsgemäßen Mischung zeigt sich dadurch, dass keine Farbschlieren mehr sichtbar sind und ein gleichmäßiger Farbton erreicht ist. Der Farbumschlag bzw. die Farbänderung, welche den Fortschritt der Aushärtung anzeigt, setzt nach dem Zusammengeben der Polyol- und Isocyanatkomponente während des Mischens ein, wobei sich der neue Farbton mit zunehmender Aushärtung der Masse intensiviert. Der Grad der Farbänderung ist dabei abhängig von der Konzentration des Farbindikators und der Zusammensetzung der Masse insgesamt.

Die Polyolkomponente der erfindungsgemäßen Masse umfasst ein oder mehrere Polyole. Bevorzugte Polyole sind Polypropylenglykole (PPG), Polyethylenglykole (PEG), Rizinusöl, rizinusölbasierende Polyole und andere auf pflanzlichen und tierischen Ölen basierende Polyole, Polyole auf der Basis von Polyestern, Polycaprolactonen, Polytetrahydrofuranen und hydroxyfunktionellen Polyacrylaten sowie deren Gemische. Erfindungsgemäß besonders bevorzugt sind Monoglyceride fetter Öle.

Die Isocyanatkomponente der erfindungsgemäßen Masse umfasst ein oder mehrere Isocyanate. Bevorzugte Isocyanate sind Diisocyanato-methyl-benzol (Toluylendiisocyanat (TDI)), dessen Isomere und deren Gemische, Diisocyanato-diphenylmethan (Diphenylmethandiisocyanat (MDI)), dessen Isomere und Homologe sowie deren Gemische, 1,6-Diisocyanato-hexan (Hexamethylendiisocyanat (HDI)), 3,5,5-Trimethyl-1-isocyanato-3-isocyanatomethylcyclohexan (Isophorondiisocyanat (IPDI)), 4,4'-Diisocyanato-dicyclohexylmethan (H₁₂MDI), dessen Isomere und deren Gemische, 1,3-Bis(isocyanato-methyl)benzol (m-Xylylendiisocyanat (XDI)), 1,6-Diisocyanato-2,2,4(2,2,4)-tri-methylhexan (TMDI), dessen Isomere und deren Gemische sowie Mischungen aus mehreren der genannten Diisocyanate. Weitere bevorzugte Isocyanate sind Addukte von Diisocyanaten und mehrwertigen Alkoholen wie z.B. Addukt von Diisocyanato-methyl-benzol (TDI) mit Trimethylolpropan (TMP), das unter dem Handelsnamen DESMODUR L bei der Firma Bayer AG erhältlich ist, Oligomere von Diisocyanaten wie z.B. Isocyanurate, Biurete, Allophanate und Uretdione sowie Prepolymere, welche durch Umsetzung von Diisocyanaten mit hydroxyfunktionellen Polymeren oder Oligomeren erhaltbar sind. Besonders bevorzugt sind Diisocyanato-diphenylmethan (MDI), dessen Isomere und Homologe sowie deren Gemische, Addukte von Diisocyanaten und mehrwertigen Alkoholen wie z.B. Addukt von Diisocyanato-methyl-benzol (TDI) mit Trimethylolpropan (TMP), Oligomere von Diisocyanaten wie z.B. Isocyanurate, Biurete, Allophanate und Uretdione sowie Prepolymere, welche durch Umsetzung von Diisocyanaten mit hydroxyfunktionellen Polymeren oder Oligomeren erhaltbar sind, wobei Diisocyanato-diphenylmethan (MDI), dessen Isomere und Homologe sowie deren Gemische ganz besonders bevorzugt sind.

Die erfindungsgemäßen Massen können beispielsweise als Beschichtungs-, Isolier- und Dichtmassen eingesetzt werden.

Zur Verwendung als Farbindikator für den Aushärtungsgrad von Massen, welche unter Verwendung von Isocyanaten herstellbar sind, sind erfindungsgemäß Farbstoffe oder Pigmente geeignet, welche bei Anwesenheit von Isocyanatgruppen einen Farbumschlag aufweisen. Bevorzugte Farbstoffe und Pigmente weisen zumindest eine chinoide Gruppe auf. Erfindungsgemäß besonders bevorzugt ist hierbei die Verwendung von Anthrachinon-Farbstoffen und Anthrachinon-Pigmenten wie beispielsweise Solvent Blue 104, Solvent Green 3, Solvent Violet 59, Solvent Green 28, Solvent Violet 13, Solvent Red 195, Solvent Orange 60, Solvent Red 179, Disperse Violet 26 und Dispers Yellow 64.

In einem weiteren Aspekt wird die Aufgabe der vorliegenden Erfindung durch ein Verfahren zur optischen Anzeige des Aushärtungsfortschritts einer unter Verwendung zumindest einer Polyolkomponente und zumindest einer Isocyanatkomponente herstellbaren Masse, insbesondere eines Zwei-Komponenten-Polyurethansystems, gelöst, wobei
(a) der Polyolkomponente ein oder mehrere Farbindikatoren, welche bei Anwesenheit von Isocyanatgruppen einen Farbumschlag aufweisen, zugesetzt werden und gegebenenfalls der Isocyanatkomponente weitere Farbstoffe und/oder Pigmente zugesetzt werden,
(b) der Isocyanatkomponente weitere Farbstoffe und/oder Pigmente zugesetzt werden,
(c) die Polyol- und die Isocyanatkomponenten miteinander zu einer Masse vermischt werden bis eine gleichmäßige Färbung der Masse erreicht ist und
(d) die Masse ausgehärtet wird, wobei der Farbumschlag die vollständige Aushärtung anzeigt,
wobei als Farbindikatoren Farbstoffe und/oder Pigmente eingesetzt werden, welche zumindest eine chinoide Gruppe aufweisen.

Erfindungsgemäß besonders bevorzugt werden Anthrachinon-Farbstoffe und Anthrachinon-Pigmente wie beispielsweise Solvent Blue 104, Solvent Green 3, Solvent Violet 59, Solvent Green 28, Solvent Violet 13, Solvent Red 195, Solvent Orange 60, Solvent Red 179, Disperse Violet 26 und Dispers Yellow 64 eingesetzt.

Bevorzugt wird im erfindungsgemäßen Verfahren eine Polyolkomponente eingesetzt, welche ein oder mehrere Polyole aufweist ausgewählt aus der Gruppe enthaltend Polypropylenglykole (PPG), Polyethylenglykole (PEG), Rizinusöl, rizinusölbasierende Polyole und andere auf pflanzlichen und tierischen Ölen basierende Polyole, Polyole auf der Basis von Polyestern, Polycaprolactonen, Polytetrahydrofuranen und hydroxyfunktionellen Polyacrylaten. Erfindungsgemäß besonders bevorzugt ist der Einsatz von Monoglyceriden fetter Öle.

Weiterhin bevorzugt wird in dem erfindungsgemäßen Verfahren eine Isocyanatkomponente eingesetzt, welche ein oder mehrere Isocyanate aufweist ausgewählt aus der Gruppe enthaltend Diisocyanato-methyl-benzol (Toluylendiisocyanat (TDI)), dessen Isomere und deren Gemische, Diisocyanato-diphenylmethan (Diphenylmethandiisocyanat (MDI)), dessen
Isomere und Homologe sowie deren Gemische, 1,6-Diisocyanato-hexan (Hexamethylendiisocyanat (HDI)), 3,5,5-Trimethyl-1-isocyanato-3-isocyanatomethylcyclohexan (Isophorondiisocyanat (IPDI)), 4,4'-Diisocyanato-dicyclohexylmethan (H₁₂MDI), dessen Isomere und deren Gemische, 1,3-Bis(isocyanato-methyl)benzol (m-Xylylendiisocyanat (XDI)), 1,6-Diisocyanato-2,2,4(2,2,4)-trimethylhexan (TMDI), dessen Isomere und deren Gemische, Addukte von Diisocyanaten und mehrwertigen Alkoholen wie z.B. Addukt von Diisocyanato-methyl-benzol (TDI) mit Trimethylolpropan (TMP), das unter dem Handelsnamen DESMODUR L bei der Bayer AG erhältlich ist, Oligomere von Diisocyanaten wie z.B. Isocyanurate, Biurete, Allophanate und Uretdione sowie Prepolymere, welche durch Umsetzung von Diisocyanaten mit hydroxyfunktionellen Polymeren oder Oligomeren erhaltbar sind. Besonders bevorzugt ist der Einsatz von Diisocyanato-diphenylmethan (MDI), dessen Isomeren und Homologen sowie deren Gemischen, Addukten von Diisocyanaten und mehrwertigen Alkoholen wie z.B. Addukt von Diisocyanato-methyl-benzol (TDI) mit Trimethylolpropan (TMP), Oligomeren von Diisocyanaten wie z.B. Isocyanuraten, Biureten, Allophanaten und Uretdionen sowie Prepolymeren, welche durch Umsetzung von Diisocyanaten mit hydroxyfunktionellen Polymeren oder Oligomeren erhaltbar sind, wobei der Einsatz von Diisocyanato-diphenylmethan (MDI), dessen Isomeren und Homologen sowie deren Gemischen ganz besonders bevorzugt ist.

### Beispiele:

Es wurden verschiedene Anthrachinon-Farbstoffe in den erfindungsgemäßen Beispielrezepturen A1 (gefüllt) und A2 (ungefüllt) eingesetzt. Tabelle 1 zeigt die Ergebnisse.

### Rezeptur A1:

### Polyolkomponente

| **Bestandteil** | **Anteil in Gew.-%** |
|---|---|
| Rizinusöl | 5 bis 50 |
| Polyol auf Rizinusölbasis | 15 bis 80 |
| Zeolithpaste 50%ig | 1 bis 10 |
| Talkum | 10 bis 70 |
| Rheologieadditiv | 0,02 bis 0,05 |
| Netzmittel | 0,02 bis 0,5 |
| Antischaummittel | 0 bis 0,1 |

### Isocyanatkomponente (Härter)

| **Bestandteil** | **Anteil in Gew.-%** |
|---|---|
| MDI | 50 bis 100 |
| Katalysator | 0 bis 10 |
| PPG 2000 | 0 bis 50 |

### Rezeptur A2

### Polyolkomponente

| **Bestandteil** | **Anteil in Gew.-%** |
|---|---|
| Rizinusöl | 5 bis 50 |
| Polyol auf Rizinusölbasis | 15 bis 95 |
| Antischaummittel | 0 bis 0,1 |

### Isocyanatkomponente (Härter)

| **Bestandteil** | **Anteil in Gew.-%** |
|---|---|
| MDI | 50 bis 100 |
| Katalysator | 0 bis 10 |
| PPG 2000 | 0 bis 50 |

**Tabelle 1**

| **Farbstoff** | **Konzentration in ppm** | **Farbumschlag** |
|---|---|---|
| **Rezeptur A1** | | |
| Solvent Blue 104 | 15 | blau - grün |
| Solvent Green 3 | 15 | blaupetrol - grün |
| Solvent Violet 59 | 15 | pink - rot |
| Solvent Green 28 | 15 | blaugrün - grasgrün |
| Solvent Violet 13 | 5 | violett - grau |
| Solvent Red 195 | 15 | altrosa - rosarot |

| **Rezeptur A2** | | |
|---|---|---|
| Solvent Blue 104 | 15 | blau - grün |

## Patentansprüche

1. Härtbare Masse enthaltend mindestens eine Komponente, welche ein oder mehrere Polyole enthält, und mindestens eine weiteren Komponente, welche ein oder mehrere Isocyanate enthält, **dadurch gekennzeichnet, dass** die Polyolkomponente mindestens einen Farbindikator enthaltend zumindest eine chinoide Gruppe aufweist und die Isocyanatkomponente einen oder mehrere weitere Farbstoffe und/oder Pigmente enthält, wobei die Farbindikatoren ausgewählt sind aus der Gruppe enthaltend Solvent Blue 104, Solvent Green 3, Solvent Violet 59, Solvent Green 28, Solvent Violet 13, Solvens Red 195, Solvent Orange 60, Solvent Red 179, Disperse Violet 26 und Dispers Yellow 64.

2. Härtbare Masse nach Anspruch 1, **dadurch gekennzeichnet, dass** der oder die Farbindikatoren Anthrachinon-Farbstoffe und/oder Anthrachinon-Pigmente sind.

3. Härtbare Masse nach einem der voranstehenden Ansprüche, **dadurch gekennzeichnet, dass** die Masse Farbindikatoren in einer Konzentration von 0,1 bis 50C ppm bezogen auf die Masse der Polyolkomponente enthält.

4. Härtbare Massen nach einem der voranstehenden Ansprüche, **dadurch gekennzeichnet, dass** die Polyolkomponente ein oder mehrere Polyole enthält, welche gewählt sind aus der Gruppe enthaltend Polypropylenglykole, Polyethylenglykole, auf Fetten und/oder ölen basierende Polyole sowie Polyole auf der Basis von Polyestern, Polycaprolactonen, Polytetrahydrofuranen und hydroxyfunktionellen Polyacrylaten.

5. Härtbare Massen nach Anspruch 4, **dadurch gekennzeichnet, dass** die auf Fetten und/oder Ölen basierende Polyole Monoglyceride fetter Öle sind.

6. Härtbare Masse nach einem der voranstehenden Ansprüche, **dadurch gekennzeichnet, dass** die Isocyanatkomponente ein oder mehrere Isocyanate enthält, welche gewählt sind aus der Gruppe enthaltend Diisocyanato-methyl-benzol, dessen Isomere und deren Gemische, Diisocyanato-diphenylmethan, dessen Isomere und Homologe sowie deren Gemische, 1,6-Diisocyanato-hexan, 3,5,5-Trimethyl-1-isocyanato-3-isocyanatomethylcyclohexan, 4,4'-Diisocyanato-dicyclohexylmethan, dessen Isomere und deren Gemische, 1,3-Bis(isocyanato-methyl)benzol, 1,6-Diisocyanato-2,2,4(2,2,4)-trimethylhexan, dessen Isomere und deren Gemische, Addukte von Diisocyanaten und mehrwertigen Alkoholen, Oligomere von Diisocyanaten sowie Prepolymere, welche durch Umsetzung von Diisocyanaten mit hydroxyfunktionellen Polymeren oder Oligomeren erhaltbar sind.

7. Härtbare Masse nach Anspruch 6, **dadurch gekennzeichnet, dass** die Isocyanatkomponente ein oder mehrere Isocyanate enthält, welche gewählt sind aus der Gruppe enthaltend Diisocyanato-diphenylmethan, dessen Isomere und Homologe sowie deren Gemische, Addukte von Diisocyanaten und mehrwertigen Alkoholen, Oligomere von Diisocyanaten sowie Prepolymere, welche durch Umsetzung von Diisocyanaten mit hydroxyfunktionellen Polymeren oder Oligomeren erhaltbar sind, bevorzugt Diisocyanato-diphenylmethan, dessen Isomere und Homologen sowie deren Gemische.

8. Härtbare Masse nach einer der voranstehenden Ansprüche, **dadurch gekennzeichnet, dass** die Masse ein oder mehrere weitere Stoffe enthält, welche gewählt sind aus der Gruppe enthaltend Füllstoffe, Katalysatoren, Weichmacher, Flammschutzmittel, Molekularsiebe und Stabilisatoren.

9. Verfahren zur optischen Anzeige des Aushärtungsfortschritts einer unter Verwendung zumindest einer Polyolkomponente und zumindest einer isocyanatkomponente herstellbaren Masse, **dadurch gekennzeichnet, dass**
(a) der Polyolkomponente ein oder mehrere Farbindikatoren, welche bei Anwesenheit von Isocyanatgruppen einen Farbumschlag aufweisen, zugesetzt werden,
(b) der Isocyanatkomponente weitere Farbstoffe und/oder Pigmente zugesetzt werden,
(c) die Polyol- und die Isocyanatkomponenten miteinander zu einer Masse vermischt werden bis eine gleichmäßige Färbung der Masse erreicht ist und
(d) die Masse ausgehärtet wird, wobei der Farbumschlag die vollständige Aushärtung anzeigt,
wobei als Farbindikatoren Farbstoffe und/oder Pigmente eingesetzt werden, welche zumindest eine chinoide Gruppe aufweisen.

10. Verfahren nach Anspruch 9, **dadurch gekennzeichnet, dass** als Farbindikatoren Anthrachinon-Farbstoffe und/oder Anthrachinon-Pigmente eingesetzt werden.

## Claims

1. A curable compound comprising at least one component containing one or more polyols and at least one further component containing one or more isocyanates, **characterized in that** the polyol component comprises at least one color indicator having at least one quinoid group and the isocyanate component contains one or more further dyes and/or pigments, wherein the color indicators are selected from the group consisting of Solvent Blue 104, Solvent Green 3, Solvent Violet 59, Solvent Green 28, Solvent Violet 13, Solvent Red 195, Solvent Orange 60, Solvent Red 179, Disperse Violet 26, and Disperse Yellow 64.

2. The curable compound according to claim 1, **characterized in that** the color indicator(s) are anthraquinone dyes and/or anthraquinone pigments.

3. The curable compound according to one of the preceding claims, **characterized in that** the compound contains color indicators in a concentration of 0.1 to 500 ppm, based on the weight of the polyol component.

4. The curable compound according to one of the preceding claims, **characterized in that** the polyol component contains one or more polyols selected from the group consisting of polypropylene glycols, polyethylene glycols, polyols based on fats and/or oils, and polyols based on polyesters, polycaprolactones, polytetrahy-drofurans and hydroxy-functional polyacrylates.

5. The curable compounds according to claim 4, **characterized in that** said polyols based on fats and/or oils are monoglycerides of fatty oils.

6. The curable compound according to one of the preceding claims, **characterized in that** the isocyanate component contains one or more isocyanates selected from the group consisting of diisocyanate-methyl-benzene and isomers and mixtures thereof, diisocyanate-diphenylmethane and isomers and homologs and mixtures thereof, 1,6-diisocyanatehexane, 3,5,5-trimethyl-1-isocyanate-3-isocyanate-methylcyclohexane, 4,4'-diisocyanate-dicyclohexyl-methane and isomers and mixtures thereof, 1,3-Bis(isocyanate-methyl)benzene, 1,6-diisocyanate-2,2,4-(2,2,4)-trimethylhexane and isomers and mixtures thereof, adducts of diisocyanates and polyhydric alcohols, oligomers of diisocyanates, and prepolymers obtainable by reaction of diisocyanates with hydroxy-functional polymers or oligomers.

7. The curable compound according to claim 6, **characterized in that** the isocyanate component contains one or more isocyanates selected from the group consisting of diisocyanate-diphenylmethane and isomers and homologs and mixtures thereof, adducts of diisocyanates and polyhydric alcohols, oligomers of diisocyanates, and prepolymers obtainable by reaction of diisocyanates with hydroxy-functional polymers or oligomers, preferably diisocyanate-diphenylmethane and isomers and homologs and mixtures thereof.

8. The curable compound according to one of the preceding claims, **characterized in that** the compound contains one or more further materials selected from the group consisting of fillers, catalysts, plasticizers, flame retardants, molecular sieves, and stabilizing agents.

9. A method for optically indicating the curing progress of a compound preparable using at least one polyol component and at least one isocyanate component, **characterized in that**
(a) one or more color indicators capable of changing color in the presence of isocyanate groups are added to said polyol component,
(b) other dyes and/or pigments are added to said isocyanate component,
(c) the polyol and isocyanate components are mixed until the resulting compound has a uniform color, and
(d) the compound is cured wherein the change of color indicates completion of curing,
wherein the color indicators used are dyes and/or pigments having at least one quinoid group.

10. The method according to claim 9, **characterized in that** the color indicators used are anthraquinone dyes and/or anthraquinone pigments.

## Revendications

1. Matière durcissable contenant au moins un composant, qui contient un ou plusieurs polyols, et au moins un autre composant, qui contient un ou plusieurs isocyanates, **caractérisée en ce que** le composant polyol comprend au moins un indicateur coloré contenant au moins un groupe quinoïde, et le composant isocyanate contient un ou plusieurs colorants et/ou pigments supplémentaires, les indicateurs colorés étant choisis dans le groupe contenant Solvent Blue 104, Solvent Green 3, Solvent Violet 59, Solvent Green 28, Solvent Violet 13, Solvent Red 195, Solvent Orange 60, Solvent Red 179, Disperse Violet 26 et Disperse Yellow 64.

2. Matière durcissable selon la revendication 1, **caractérisée en ce que** le ou les indicateurs colorés sont des colorants anthraquinone et/ou des pigments anthraquinone.

3. Matière durcissable selon l'une quelconque des revendications précédentes, **caractérisée en ce que** la matière contient des indicateurs colorés en une concentration de 0,1 à 500 ppm par rapport à la masse du composant polyol.

4. Matière durcissable selon l'une quelconque des revendications précédentes, **caractérisée en ce que** le composant polyol contient un ou plusieurs polyols qui sont choisis dans le groupe contenant les polypropylène glycols, les polyéthylène glycols, les polyols à base de matières grasses et/ou d'huiles, ainsi que les polyols à base de polyesters, polycaprolactones, polytétrahydrofuranes et polyacrylates à fonction hydroxy.

5. Matière durcissable selon la revendication 4, **caractérisée en ce que** les polyols à base de matières grasses et/ou d'huiles sont des monoglycérides d'huiles grasses.

6. Matière durcissable selon l'une quelconque des revendications précédentes, **caractérisée en ce que** le composant isocyanate contient un ou plusieurs isocyanates qui sont choisis dans le groupe contenant le diisocyanato-méthyl-benzène, ses isomères et leurs mélanges, le diisocyanato-diphénylméthane, ses isomères et homologues et leurs mélanges, le 1,6-diisocyanatohexane, le 3,5,5-triméthyl-1-isocyanato-3-isocyanatométhylcyclohexane, le 4,4'-diisocyanato-dicyclohexylméthane, ses isomères et leurs mélanges, le 1,3-bis(isocyanato-méthyl)benzène, le 1,6-diisocyanato-2,2,4(2,2,4)-triméthylhexane, ses isomères et leurs mélanges, les adduits de diisocyanates et d'alcools polyvalents, les oligomères de diisocyanates et les prépolymères qui peuvent être obtenus par mise en réaction de diisocyanates avec des polymères ou oligomères à fonction hydroxy.

7. Matière durcissable selon la revendication 6, **caractérisée en ce que** le composant isocyanate contient un ou plusieurs isocyanates qui sont choisis dans le groupe contenant le diisocyanato-diphénylméthane, ses isomères et homologues et leurs mélanges, les adduits de diisocyanates et d'alcools polyvalents, les oligomères de diisocyanates et les prépolymères qui peuvent être obtenus par mise en réaction de diisocyanates avec des polymères ou oligomères à fonction hydroxy, de préférence le diisocyanato-diphénylméthane, ses isomères et homologues et leurs mélanges.

8. Matière durcissable selon l'une quelconque des revendications précédentes, **caractérisée en ce que** la matière contient une ou plusieurs autres substances, qui sont choisies dans le groupe contenant les charges, les catalyseurs, les plastifiants, les agents ignifuges, les tamis moléculaires et les stabilisateurs.

9. Procédé de visualisation optique de l'avancée du durcissement d'une matière pouvant être fabriquée en utilisant au moins un composant polyol et au moins un composant isocyanate, **caractérisé en ce que**
(a) un ou plusieurs indicateurs colorés, qui présentent un virement de couleur lors de la présence de groupes isocyanate, sont ajoutés au composant polyol,
(b) des colorants et/ou pigments supplémentaires sont ajoutés au composant isocyanate,
(c) les composants polyol et isocyanate sont mélangés l'un avec l'autre en une matière jusqu'à l'obtention d'une coloration uniforme de la matière, et
(d) la matière est durcie, le virement de couleur indiquant le durcissement complet,
des colorants et/ou des pigments qui comprennent au moins un groupe quinoïde étant utilisés en tant qu'indicateurs colorés.

10. Procédé selon la revendication 9, **caractérisé en ce que** des colorants anthraquinone et/ou des pigments anthraquinone sont utilisés en tant qu'indicateurs colorés.
